# EUROPEAN PATENT SPECIFICATION

(11) **EP 1 066 752 B1**
(45) Date of publication and mention of the grant of the patent: **20.06.2007**
(21) Application number: 00202311.7
(22) Date of filing: 03.07.2000
(51) Int. Cl.: A01K 1/00, B01D 53/84, B01D 47/14, C02F 3/10

(54) **Air washer**
Luftwäscher
Laveur d'air

(30) Priority: 07.07.1999 NL 1012530
(43) Date of publication of application: 10.01.2001
(73) Proprietor: Laka Milieu B.V., 7461 JP Rijssen (NL)
(72) Inventor: Niemeijer, Johannes Antonius, Deceased (NL); Niemeijer, Gerardus Johannes Timotheus, Deceased (NL)

(56) References cited:
- EP-A- 0 328 758
- WO-A-98/33580
- NL-C- 1 000 490
- US-A- 5 693 383

## Description

The invention relates to an arrangement for washing and cleaning air emanating from a stable, provided with washing means for washing out dust, smelly components and ammonia with water, and with nitrification means for nitrifying dissolved ammonia, the washing means comprising an under operational conditions vertically oriented duct, to a bottom side of which the air is supplied, provided with a first set of filling elements and with spraying means for wetting the first set of filling elements.

An arrangements of this type is known from NL-C-1 000 490. In the known washing arrangement, the air to be cleaned is blown directly into the first set of filling elements, which implies that dust and particles may reach the filling elements and gradually deteriorate it. The arrangement according to the invention obviates this problem and is characterized in that the washing means comprise additional spraying means and an air spreader, positioned below the first set of filling elements. The first spraying means and the air spreader are arranged for washing out the dust before it can reach the first set of filling elements, which is far more effective then the rather limited washing effect of large droplets dripping out off the filling elements.

From EP-A-0 328 758 an air washer is known provided with a flowing bed for washing out polluted air.

Preferably, the washing means comprise a droplet collector, positioned above the first set of filling elements, so as to prevent drops of water leaving the arrangement on a top side.

A favourable embodiment according to a further aspect of the invention is characterized in that the first set of filling elements comprises a system of under operational conditions vertically positioned tubes, each tube having a large surface area mesh structure. In the process of washing, air flows upwards through the tubes while water flows from above alongside the tubes and the large area provides for a sufficient interaction between the air and the water.

A favourable embodiment according to another aspect of the invention is characterized in that the air spreader consists of a set of strips, disposed in parallel, arranged for separating an upward airflow from a downward flow of at least substantially the water emanating from the spraying means. In this embodiment the washing means are provided with a first outlet, for letting off water substantially emanating from the additional spraying means, containing at least substantially dust, and with a second outlet for letting off water substantially emanating from the spraying means, containing at least substantially dissolved ammonia.

A favourable embodiment according to a further aspect of the invention is characterized in that the nitrification means comprise a vessel with a second set of filling elements of mutually connected tubes, through which the water emanating from the washing means may flow. Preferably, the nitrification means are provided with an inlet threshold and an outlet threshold, arranged for making the water flow in an upward direction through the second set of filling elements, in order to give dust and dirt an opportunity to settle.

A favourable embodiment according to a further aspect of the invention, which gives a fast settling of dust and dirt, is characterized in that while in operation the tubes in the second set of filling elements are placed in the vessel making an angle of 10-20 degrees with a vertical line. A very favourable realisation is characterized in that while in operation the tubes are placed in the vessel making an angle of 13-17 degrees with a vertical line.

A favourable embodiment according to another aspect of the invention, which practically excludes a possibility of deterioration and clogging of the second set of filling elements is characterized in that the tubes are made of a synthetic material, have a circular cross section and are at least substantially smooth walled.

The invention will now be further explained with reference to the following figures, in which:
- Fig. 1: schematically shows a possible embodiment of the washing means in front view;
- Fig. 2: schematically shows this embodiment of the washing means in side view;
- Fig. 3A: shows in perspective view a possible embodiment of the first set of filling elements;
- Fig. 3B: shows in perspective view a possible embodiment of an element of a droplet collector;
- Fig. 4A: schematically shows a possible embodiment of the nitrification means in cross section;
- Fig. 4B: schematically shows this embodiment of the nitrification means in top view.

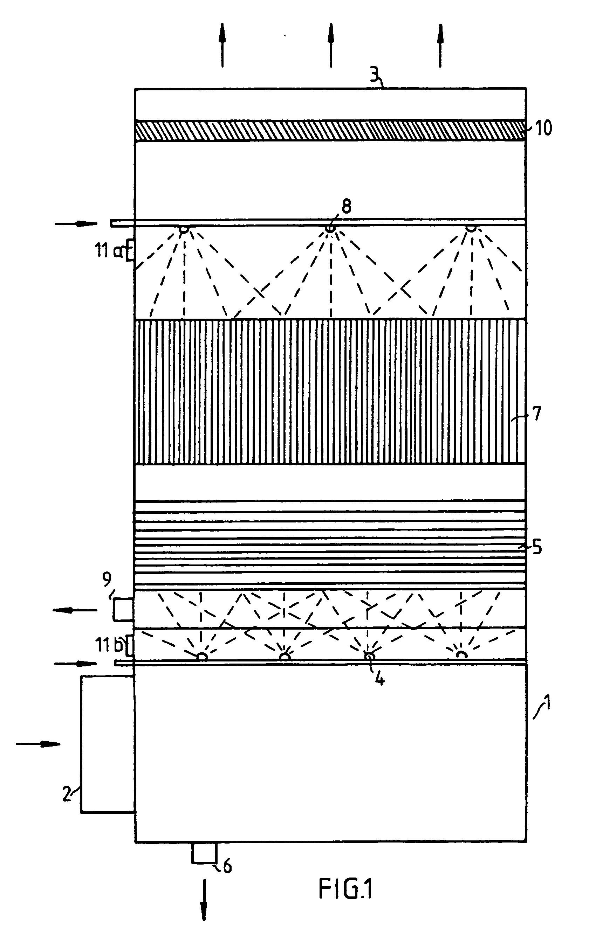

Fig. 1 schematically shows a possible embodiment of the washing means in front view, in which from a housing 1 for clarity reasons a front side has been removed. Housing 1 is provided with an air inlet 2, into which a fan, not shown here, blows air emanating from a stable. The air contains dust, odours and gaseous ammonia and the washing means must take care of removing this material before the air leaves housing 1 via air outlet 3. For that purpose the air is first mixed with atomised water produced by first spraying means 4 and then conducted through an air spreader 5. Air spreader 5 consists of a number of strips, disposed in parallel, which intercept substantially all the water distributed by first spraying means 4, including the caught-in dust. This water, polluted with dust, leaves housing 1 via a first outlet 6. The air from which substantially all dust has been removed is then guided through a first set of filling elements 7, which consists of a system of tubes, mounted in parallel, having an open-worked structure, for giving them an effective area which is many times larger than the area of a tube as such. While the air flows upwards from below, via the first set of filling elements 7, atomised water is distributed from above over the first set of filling elements 7 with the aid of second spraying means 8. Thereby the ammonia dissolves in the water, especially on the surface of the tubes. Because of the short time the air and the water stay in the first set of filling elements 7, no biologically active mass is formed whatsoever, as a result of which cleaning is practically never demanded. The water dripping off the first set of filling elements 7 is blown to the front side and the back side of housing 1 by air spreader 5, where it leaves housing 1 via second outlets 9. In order to prevent water droplets, containing dissolved ammonia, from leaving housing 1 via air outlet 3, a droplet collector, well known in the art, is mounted in air outlet 3. For checking the proper functioning of the washing means, two sight glasses 11a, 11b have been provided, more particular for monitoring the spraying means.

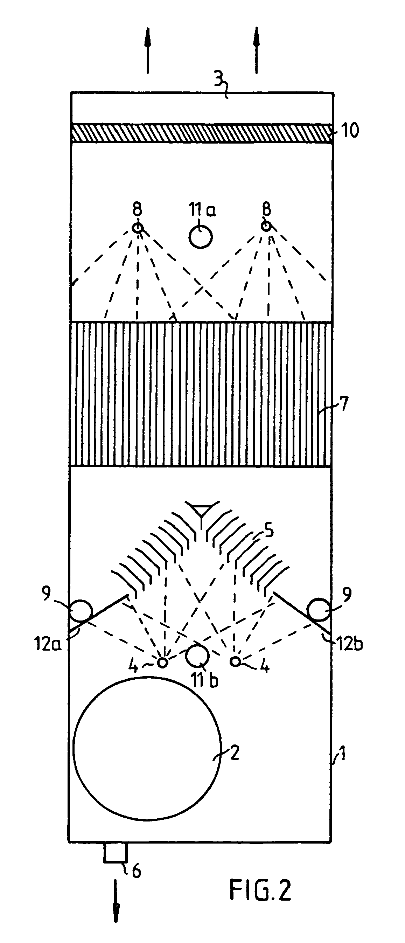

Fig. 2 schematically shows this embodiment of the washing means in side view, with housing 1, air inlet 2, air outlet 3, first spraying means 4 and air spreader 5. Air spreader 5 evenly distributes the incoming air over the first set of filling elements 7. Moreover air spreader 5 collects substantially all water droplets distributed by first spraying means 4, which water drips downward and leaves housing 1 via first outlet 6. Moreover, air spreader 5 realises a separation between the air, flowing upward, and the water dripping off the first set of filling elements 7. Thereby the water is blown sideward, where it is collected by two screens 12a, 12b, after which the water leaves housing 1 via second outlets 9.

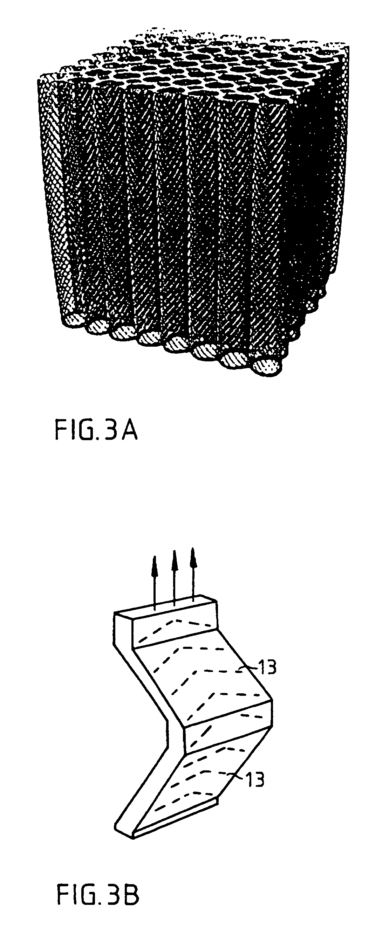

Fig. 3A shows in perspective view a possible embodiment of the first set of filling elements, which is commercially available and intended to be used for example for cleaning water. Special is the open-worked structure, with which a large area is created; while in the longitudinal direction the openings are so large that clogging is substantially excluded.

Fig. 3B shows in perspective view a possible embodiment of an element of a droplet collector, as it is stacked inside a commercially available droplet collector. Due to the selected shape the droplets will substantially always get caught by a wall, which effect will be enhanced even further by ribs 13 placed onto the inner wall.

Fig. 4A schematically shows a possible embodiment of the nitrification means in cross section. Housing 14 is provided with an inlet 15, which is connected to first outlet 6 and to second outlet 9 of the washing means and with an outlet 16, letting off water which is substantially free from ammonia, which water is partly supplied to first spraying means 4 and second spraying means 8 of the washing means. Via inlet 15, water is supplied which contains dust, odours and dissolved ammonia. The dust collects on the bottom of housing 14 and may be sucked-off periodically. The water flows underneath an inlet threshold 17 and is guided through a second set of filling elements 18, built of smooth synthetic tubing and glued together. In housing 14, and more particularly in and around the synthetic tubes, a biologically active mass is formed, which transforms the ammonia in a nitrification process into nitrates and nitrites. It is of great importance than that on one hand sufficient biologically active mass is formed in order to obtain a sufficiently fast transformation and on the other hand that not too much biologically active mass is formed, because this would necessitate a regular cleaning. In the embodiment shown here this is realised by using a very large, smooth area, consisting of 600 PVC tubes, each having a diameter of 4 cm. and a length of 2 meter, packed together in set 18. Moreover it is important for obtaining a good performance that the set is given a suitable inclination angle. Experimentally it has been found that the angle should preferably be selected 15 degrees and in any case between 10 and 20 degrees. The water passing in an upward direction a set 18 of this kind crosses an outlet threshold 19 and is then substantially free of ammonia, because of which it may be reused. If it is established that the water contains a too large amount of nitrate or nitrite, then a small part of the water is replaced by clean water, while the water that has been replaced is removed for further processing. The advantage of a gradual replacement is that the biologically active mass will always experience the same circumstances, which gives the biologically active mass a possibility to optimal evolve for these circumstances. Initially it may be advantageous to measure the pH value of the water inside housing 13 and to maintain it within certain limits, but if sufficient biologically active mass has been formed, this is no longer necessary. Finally it may be noted that the biologically active mass will in particular form inside the relatively narrow channels between the tubes in set 18, while on the inside the tubes are covered with a thin layer.

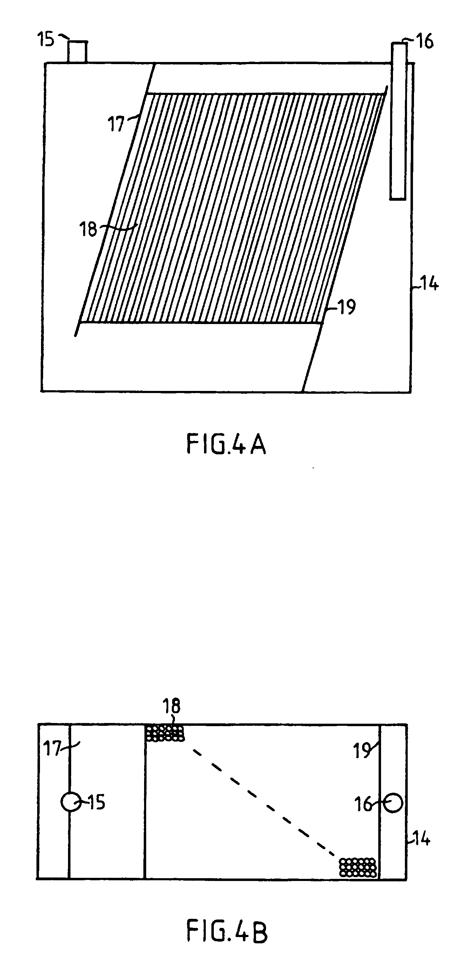

Fig. 4B schematically shows this embodiment of the nitrification means in top view, with the top lid of housing 14 being removed for clarity reasons. Housing 14 is provided with inlet 15, outlet 16, inlet threshold 17, set 18 made of PVC tubing and outlet threshold 19.

## Claims

1. Arrangement for washing and cleaning air emanating from a stable, provided with washing means for washing out dust, smelly components and ammonia with water, and with nitrification means for nitrifying dissolved ammonia,
the washing means comprising an under operational conditions vertically oriented duct (1), to a bottom side of which the air is supplied, provided with a first set of filling elements (7) and with spraying means (8) for wetting the first set of filling elements (7), **characterized in that** the washing means comprise additional spraying means (4) and an air spreader (5), positioned below the first set of filling elements (7).

2. Arrangement according to claim 1, **characterised in that** the washing means comprise a droplet collector (10), positioned above the first set of filling elements (7).

3. Arrangement according to claim 1 or 2, **characterized in that** the first set of filling elements (7) comprises a system of under operational conditions vertically positioned tubes, each tube having a large surface area mesh structure.

4. Arrangement according to one of the previous claims, **characterized in that** the air spreader (5) consists of a set of strips, disposed in parallel.

5. Arrangement according to claim 4, **characterized in that** the washing means are provided with a first outlet (6), for letting off water substantially emanating from the additional spraying means (4) and with a second outlet (9) for letting off water substantially emanating from the spraying means (8).

6. Arrangement according to claim 1, **characterized in that** the nitrification means comprise a vessel (14) with a second set of filling elements (18) of mutually connected tubes, through which the water emanating from the washing means may flow.

7. Arrangement according to claim 6, **characterized in that** the nitrification means are provided with an inlet threshold (17) and an outlet threshold (19), arranged for making the water flow in an upward direction through the second set of filling elements (18).

8. Arrangement according to claim 7, **characterized in that** while in operation the tubes in the second set of filling elements (18) are placed in the vessel (14) making an angle of 10-20 degrees with a vertical line.

9. Arrangement according to claim 8, **characterized in that** while in operation the tubes are placed in the vessel (14) making an angle of 13-17 degrees with a vertical line.

10. Arrangement according to claim 9, **characterized in that** the tubes are made of a synthetic material, have a circular cross section and are at least substantially smooth walled.

## Patentansprüche

1. Vorrichtung zum Waschen und Reinigen von aus einem Stall austretender Luft, versehen mit Waschmitteln für das Auswaschen von Staub, Geruchsstoffen und Ammoniak mittels Wasser und mit Nitrifikationsmitteln für das Nitrifizieren von gelöstem Ammoniak, wobei die Waschmittel einen in einem Gebrauchszustand senkrecht angeordneten Kanal (1) umfassen, an dessen Bodenseite Luft zugeführt wird, versehen mit einer ersten Gruppe von Füllelementen (7) und mit Sprühmitteln (8) für das Nasshalten der ersten Gruppe von Füllelementen (7), **dadurch gekennzeichnet, dass** die Waschmittel zusätzliche Sprühmittel (4) sowie einen unterhalb der ersten Gruppe von Füllelementen (7) positionierten Luftverteiler (5) umfassen.

2. Vorrichtung gemäß Anspruch 1, **dadurch gekennzeichnet, dass** die Waschmittel einen oberhalb der ersten Gruppe von Füllelementen (7) positionierten Tropffänger (10) umfassen.

3. Vorrichtung gemäß Anspruch 1 oder 2, **dadurch gekennzeichnet, dass** die erste Gruppe von Füllelementen (7) ein System umfasst, bestehend aus in dem Gebrauchszustand senkrecht angeordneten Röhren, wobei jede Röhre ein Maschengefüge mit einer großen Oberfläche besitzt.

4. Vorrichtung gemäß einem der vorangehenden Ansprüche, **dadurch gekennzeichnet, dass** der Luftverteiler (5) aus einer Gruppe parallel angeordneter Laschen besteht.

5. Vorrichtung gemäß Anspruch 4, **dadurch gekennzeichnet, dass** die Waschmittel eine erste Abflussöffnung (6) für das Ablassen des zumindest im Wesentlichen von den zusätzlichen Sprühmitteln (4) stammenden Wassers und eine zweite Abflussöffnung (9) für das Ablassen des zumindest im Wesentlichen von den Sprühmitteln (8) stammenden Wassers umfassen.

6. Vorrichtung gemäß Anspruch 1, **dadurch gekennzeichnet, dass** die Nitrifikationsmittel ein Gefäß (14) mit einer zweiten Gruppe von Füllelementen (18) umfassen, bestehend aus miteinander verbundenen Röhren, durch die das von den Waschmitteln stammende Wasser fließen kann.

7. Vorrichtung gemäß Anspruch 6, **dadurch gekennzeichnet, dass** die Nitrifikationsmittel mit einer Zuflussschwelle (17) und einer Abflussschwelle (19) versehen sind, eingerichtet für das durch die zweite Gruppe von Füllelementen (18) in aufwärts gehende Richtung Fließen lassen des Wassers.

8. Vorrichtung gemäß Anspruch 7, **dadurch gekennzeichnet, dass** die Röhren in der zweiten Gruppe von Füllelementen (18) in einem Gebrauchszustand unter einem Winkel von 10-20 Grad hinsichtlich der Senkrechten in dem Gefäß (14) platziert worden sind.

9. Vorrichtung gemäß Anspruch 8, **dadurch gekennzeichnet, dass** die Röhren in dem Gebrauchszustand unter einem Winkel von 13-17 Grad hinsichtlich der Senkrechten in dem Gefäß (14) platziert worden sind.

10. Vorrichtung gemäß Anspruch 9, **dadurch gekennzeichnet, dass** die Röhren aus einem Kunststoff bestehen, einen runden Querschnitt haben sowie zumindest im Wesentlichen glattwandig sind.

## Revendications

1. Arrangement pour laver et nettoyer d'air originaire d'une porcherie, prévu de moyens de nettoyage pour enlever poussière, odeurs et ammoniac avec de l'eau et de moyens de nitrification pour nitrifier de l'ammoniac dissout, où les moyens de nettoyage comprennent un conduit (1), en mode de fonctionnement positionné vertical, à un côté inférieur de lequel de l'air est introduit, prévu d'un premier groupe d' éléments de charge (7) et de moyens d'arroser (8) pour humidifier le premier group d' éléments de charge (7), **caractérisé en ce que** les moyens de nettoyage comprennent des moyens d'arroser additionnelles (4), ainsi qu'un distributeur d'air (5), positionné sous le premier group d' éléments de charge (7).

2. Arrangement selon la revendication 1, **caractérisé en ce que** les moyens de nettoyage comprennent un pare-gouttes (10), positionné en haut du premier group d' éléments de charge (7).

3. Arrangement selon la revendication 1 ou 2, **caractérisé en ce que** le premier group d' éléments de charge (7) comprend un système de tubes, en mode de fonctionnement positionné vertical, chacun tube ayant une structure de mailles avec une grande surface.

4. Arrangement tel que revendiqué dans une quelconque des revendications précédentes, **caractérisé en ce que** le distributeur d'air (5) comprend un groupe de bandes, disposée en parallèle.

5. Arrangement selon la revendication 4, **caractérisé en ce que** les moyens de nettoyage sont prévus d'un premier échappement (6) pour laisser échapper l'eau au moins sensiblement originaire des moyens d'arroser additionnelles (4) et d'un deuxième échappement (9) pour laisser échapper l'eau au moins sensiblement originaire des moyens d'arroser (8).

6. Arrangement selon la revendication 1, **caractérisé en ce que** les moyens de nitrification comprennent un tonneau(14) comprenant un deuxième group d'éléments de charge (18) de tubes mutuellement rattachés, par lequel l'eau originaire de moyens de nettoyage peut couler.

7. Arrangement selon la revendication 6, **caractérisé en ce que** les moyens de nitrification sont prévus d'un seuil d'entré (17) et d'un seuil d'échappement (19), arrangés pour laisser couler l'eau de bas en haut à travers le deuxième group d'éléments de charge (18).

8. Arrangement selon la revendication 7, **caractérisé en ce que** les tubes dans le deuxième group d'éléments de charge (18) sont en mode de fonctionnement placés dans le tonneau (14) sous un angle de 10-20 degrés vis-à-vis la perpendiculaire.

9. Arrangement selon la revendication 8, **caractérisé en ce que** les tubes sont en mode de fonctionnement placés dans le tonneau (14) sous un angle de 13-17 degrés vis-à-vis la perpendiculaire.

10. Arrangement selon la revendication 9, **caractérisé en ce que** les tubes sont fabriqués en plastique, qu'ils ont un profil rond et qu'ils ont une paroi au moins sensiblement lisse.
